# EUROPEAN PATENT APPLICATION

(11) **EP 4 737 210 A1**
(43) Date of publication of application: **06.05.2026**
(21) Application number: 24831110.2
(22) Date of filing: 22.05.2024
(51) Int. Cl.: B60N 2/874

(54) **VEHICLE SEAT WITH ATTACHABLE NECK PILLOW**

(30) Priority: 27.06.2023 ES 202331140 U
(71) Applicant: Pacheco Gomez, Rosario, 41900 Camas (Sevilla) (ES)
(72) Inventor: Pacheco Gomez, Rosario, 41900 Camas (Sevilla) (ES)
(74) Representative: Herrero & Asociados, S.L.
(86) International application number: PCT/ES2024/070309
(87) International publication number: WO 2025/003535

(57) **Abstract**

Vehicle seat (1) provided with a horseshoe-shaped neck cushion (2), where the cushion in turn comprises, on its rear side, facing an opening, fastening means for its placement on the seat backrest, the seat also being provided with a recess (4) of a size corresponding to the size of the cushion (2) where said cushion (2) is housed when it is in the folded position and not in use.

## Description

### TECHNICAL FIELD

This utility model falls within the scope of human needs, particularly in the area of ergonomic devices. More specifically, it refers to a vehicle seat equipped with a foldable cushion that protects the cervical vertebrae during periods of hypotension.

### STATE OF THE ART

The cervical spine is a delicate but flexible structure composed of nerves, muscles, ligaments and tendons. It comprises seven stacked bones called vertebrae, labelled C1 to C7. The upper part of the cervical spine connects to the skull and the lower part to the upper back, approximately at shoulder height. Viewed from the side, the cervical spine forms a lordotic curve, curving gently towards the front of the body and then backwards.

The spine houses the spinal cord, which is responsible for sending messages from the brain to control all aspects of the body. The spinal cord is a bundle of nerves that extends from the brain and runs through the cervical spine and thoracic spine (upper and middle back) before ending just before the lumbar spine (lower back). Each vertebra has a large hole (vertebral foramen) through which the spinal cord passes. Together, these vertebrae keep the spinal cord protected within a bony tunnel called the spinal canal.

The cervical spine bears a heavy load, as the head weighs an average of 3 to 5 kilograms. In addition to supporting the head, the cervical spine allows for neck flexibility and range of motion of the head. Small holes (foramina in the transverse processes) in the cervical spine provide a passageway for the vertebral arteries to carry blood to the brain. These openings for blood vessels are only present in the vertebrae of the cervical spine from C1 to C6 (not in C7 or below).

With so many critical nerves, blood vessels, and joints in a relatively small space, the cervical spine is one of the most complex regions of the body and must be well protected.

During journeys in private vehicles, trains, aeroplanes, boats, etc., active protection of the cervical area is essential, both in the event of possible accidents and when sleeping and the body enters a state of hypotonia.

### SUMMARY OF THE INVENTION

This utility model solves the technical problem described above thanks to a vehicle seat equipped with a pivoting horseshoe-shaped cervical cushion that is stored in a recess in the seat when not in use. The cushion comprises means for attaching it to the seat backrest to allow it to rotate so that it surrounds the neck during use and is housed in the seat recess when not in use.

Optionally, the cushion is provided with two hinges that can be attached to the seat backrest and a ball joint that allows the cushion to assume two positions, one parallel to the seat inside the recess (folded position) and the other embracing the driver's neck. The seat recess is also optionally covered by a fabric to cover the cushion when it is in the folded position.

### BRIEF DESCRIPTION OF THE FIGURES

In order to aid in a better understanding of the characteristics of the invention and to supplement this description, the following figures are included as an integral part thereof, which are illustrative and not limiting:
Figure 1 shows the cushion of the invention in the folded position.
Figure 2 shows the cushion in use.

### DETAILED DESCRIPTION

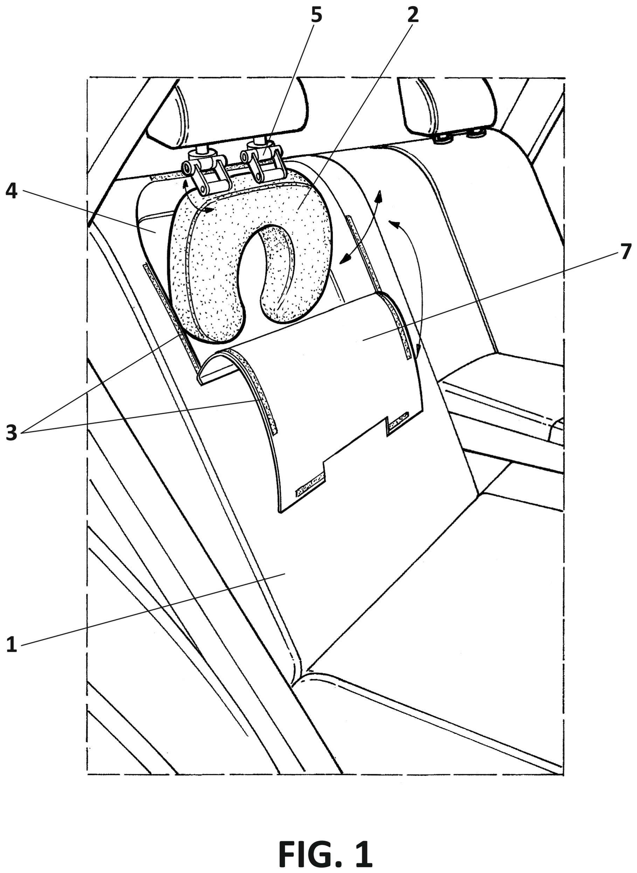

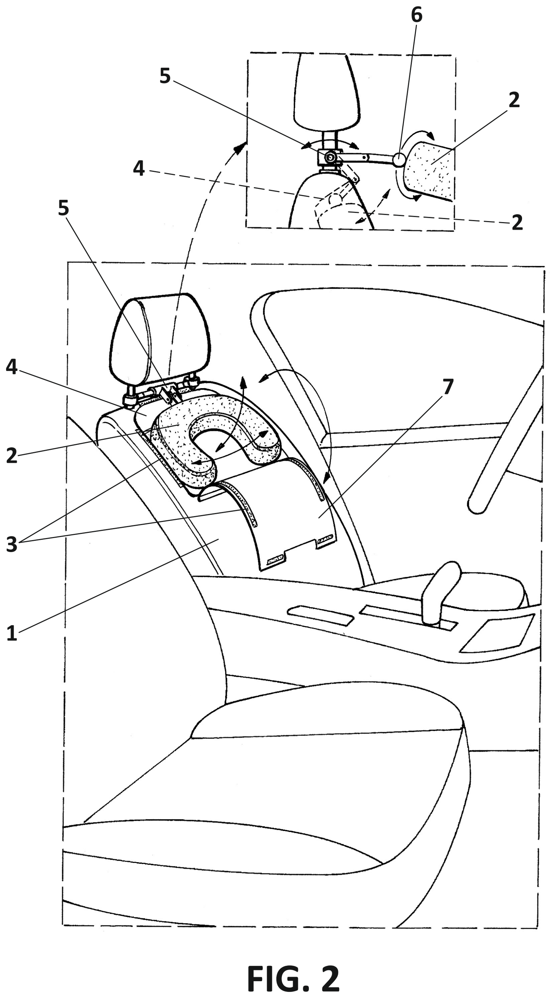

The present utility model solves the aforementioned problems by providing passive support and adequate neck support in any type of vehicle . With reference to Figures 1 and 2, the utility model provides a vehicle seat (1) equipped with a horseshoe-shaped cervical cushion (2) and provided at the rear, facing an opening, with fastening means for attachment to the backrest. The seat is also provided with a recess (4) corresponding in size to the cushion (2), where the cushion (2) is housed when it is folded and not in use. The fastening means may be Velcro^{©} strips, hooks, magnets, etc. In a preferred example, the fastening means may be hinges (5) and the connection between the hinges and the cushion may be made by means of a ball joint (6). The recess is covered by a fabric (7) with Velcro^{©} (3) when the cushion is in its folded position.

The cushion has a total width of 25 to 35 cm, a depth of 13 to 22 cm and a thickness of the extensions that delimit the opening for the neck of 10 to 13 cm.

In view of this description and figures, those skilled in the art will understand that the invention has been described according to some preferred embodiments thereof, but that multiple variations may be introduced into said preferred embodiments without exceeding the scope of the invention as claimed.

## Claims

1. Vehicle seat (1) with a backrest, **characterised in that** it is provided with a horseshoe-shaped cervical cushion (2), where the cushion also comprises, on its rear part, facing an opening for the neck, fastening means for pivotable placement on the backrest, the vehicle seat also being provided with a recess (4) of a size corresponding to the size of the cushion (2), where said cushion (2) remains inside the recess (4) when it is in a folded position and not in use.

2. Vehicle seat according to claim 1, **characterised in that** the fastening means are hinges (5) and a ball joint (6).

3. Vehicle seat according to any of claims 1 or 2, **characterised in that** the recess is provided with a fabric cover (7).
